# EUROPÄISCHE PATENTSCHRIFT

(11) **EP 2 889 640 B1**
(45) Veröffentlichungstag und Bekanntmachung des Hinweises auf die Patenterteilung: **07.09.2016**
(21) Anmeldenummer: 14004270.6
(22) Anmeldetag: 18.12.2014
(51) Int. Cl.: G01S 17/02, G01S 17/42, G01S 17/58, G01S 17/88, G01S 7/497, G01S 7/51

(54) **Verfahren zur Ausrichtung eines Laserscanners zu einer Fahrbahn**
Method for aligning a laser scanner to a path
Procédé d'alignement d'un scanner laser par rapport à une voie de circulation

(30) Priorität: 23.12.2013 DE 102013114821
(43) Veröffentlichungstag der Anmeldung: 01.07.2015
(73) Patentinhaber: Jenoptik Robot GmbH, 40789 Monheim (DE)
(72) Erfinder: Lehning, Michael, 31137 Hildesheim (DE); Trummer, Michael, 31137 Hildesheim (DE); Michaelsen, Marcos, 40764 Langenfeld (DE); Ortner, Marko, 40789 Monheim (DE)
(74) Vertreter: Waldauf, Alexander

(56) Entgegenhaltungen:
- EP-A1- 2 527 872
- EP-A2- 2 528 048
- EP-B1- 2 105 761

## Beschreibung

Die Erfindung betrifft ein Verfahren, mit dem ein Messbereich eines neben einer Fahrbahn aufgestellten Laserscanners, der mit einer Kamera fest verbunden ist, zur Fahrbahnoberfläche ausgerichtet werden kann und wie es gattungsgemäß aus der DE 10 2011 050 659 B4 bekannt ist.

Bei der Verwendung von berührungsfreien Messgeräten für Verkehrsmessungen ist es wichtig, dass der Verlauf der Messstrahlung und damit der Messbereich in seiner Lage bezogen auf die Lage der Fahrbahn vorbestimmt festgelegt wird.

Dies gilt insbesondere für Laserscanner, bei denen der Messbereich durch einen Scanwinkelbereich bestimmt ist, innerhalb dem ein Laserstrahl, gegenüber einer den Scanwinkelbereich halbierenden Mittenachse um eine orthogonal auf der Scanebene im Ursprung des Scanwinkelbereiches stehende Achse ausgelenkt wird. Die Divergenz des Laserstrahls vernachlässigend, stellt der Messbereich so eine begrenzte Ebene dar und seine räumliche Lage ist durch die Anordnung und Ausrichtung des Laserscanners zur Fahrbahn bezogen auf Merkmale der Fahrbahn bestimmt.

Davon ausgehend, dass nur Reflexionssignale von Fahrzeugen erhalten werden, wenn die Scanebene in einem Höhenbereich von ca. 45 cm bis ca. 70 cm oberhalb der Fahrbahnoberfläche liegt, so dass der Laserstrahl in einer Höhe von ca. 45 cm bis ca. 70 cm auf das Fahrzeug trifft, dass der Messbereich in der Regel mehrere Fahrspuren einer Fahrbahn abdecken soll und ein durch den Messbereich fahrendes Fahrzeug mit einer Mindesthäufigkeit detektiert werden soll, muss der Laserscanner, der situationsbezogen durch unterschiedliche Bodenhöhen außerhalb der Fahrbahn in einer unterschiedlichen Aufstellhöhe zum Fahrbahnrand aufgestellt wird, optimal zum Fahrbahnrand und zur Fahrbahnoberfläche ausgerichtet werden.

Unter einem Laserscanner soll in der vorliegenden Beschreibung ein komplettes einsatzfähiges Gerät mit einem Gestell zum temporären oder dauerhaften Aufstellen verstanden werden, wie es in der Verkehrsmessung verwendet wird. Über einen um eine Scanachse rotierenden oder schwenkenden Scannerspiegel wird ein von einer Laserquelle kommender gepulster Laserstrahl, innerhalb eines vorgegebenen Scanwinkelbereiches, um eine den Scanwinkelbereich halbierende Mittenachse in einer Scanebene abgelenkt. Über die Impuls-Laufzeitmessung wird aus den Reflexionssignalen, die durch Reflexion des gepulsten Laserstrahls an Flächen (Reflexionspunkte) durch den Messbereich fahrender Fahrzeuge entstehen, die Entfernung des Reflexionspunktes ermittelt. Die Reflexionssignale eines Fahrzeuges beschreiben aufgrund der reflektierenden Flächen des Fahrzeuges während eines Scans ein annähernd senkrecht aufeinander stehendes Streckenpaar, das heißt einen rechten Winkel. Dieser rechte Winkel verschiebt sich bei einer Durchfahrt eines Fahrzeuges von Scan zu Scan, aus der Verschiebung der rechten Winkel, wird die Geschwindigkeit des zu vermessendes Fahrzeuges bestimmt.

Um eine hinreichende Genauigkeit für die Geschwindigkeit zu erreichen, werden eine ausreichende Anzahl von Verschiebungen der rechten Winkel benötigt. Dazu muss das Fahrzeug eine Mindeststrecke im Messbereich zurücklegen, um eine ausreichende Anzahl von Scans mit Reflexionssignalen pro Fahrzeug zu erhalten. Daher muss, wie bereits erläutert, der Messbereich, der nur durch eine begrenzte Ebene gebildet wird, optimal zur Fahrbahnoberfläche und zum Fahrbahnrand ausgerichtet werden. Darüber hinaus muss die Ausrichtung des Laserscanners bekannt sein, um aus den Reflexionssignalen eindeutige Rückschlüsse auf die Position des angemessenen Fahrzeuges ziehen zu können. Das heißt, die Lage des gepulsten Laserstrahls muss zu jedem Messzeitpunkt einem bekannten vertikalen Winkel mit der Fahrbahnoberfläche und einem bekannten horizontalen Winkel mit dem Fahrbahnrand zugeordnet werden können, um aus einem dem Messzeitpunkt zugeordneten Entfernungswert auf eine Position des Reflexionspunktes bezogen auf die Fahrbahn schließen zu können.

Die Ausrichtung eines Laserscanners zu einer Fahrbahn wird grundsätzlich durch drei Parameter beschrieben, den Rollwinkel, den Nickwinkel und den Seitenwinkel (Gierwinkel). Gemäß dem Stand der Technik wird der Laserscanner mit einer Aufstellhöhe aufgestellt, die innerhalb des Höhenbereiches liegt, in dem Fahrzeuge sicher detektiert werden können. Erfindungsgemäß soll auch ein Laserscanner mit einer größeren Aufstellhöhe aufgestellt werden können. Dafür wird ein Nickwinkel in Abhängigkeit von der Aufstellhöhe eingestellt. Der Rollwinkel soll in jedem Fall gleich Null sein.

Der Rollwinkel beschreibt die Neigung der Scanebene gegenüber der Fahrbahnoberfläche, die als eine Ebene verstanden wird. Der Rollwinkel ist gleich Null bzw. ist beseitigt, wenn eine Laserscannerlängsachse eines durch den Laserscanner definierten Laserscannerkoordinatensystems in einer Ebene parallel zur Fahrbahnoberfläche liegt. Der Rollwinkel kann auch erklärt werden als der Winkel, den eine in die Scanebene gelegte Senkrechte auf einer zwischen der Fahrbahnoberfläche und der Scanebene gebildeten Schnittgeraden mit der Mittenachse des Laserscanners einschließt. Das heißt, der Rollwinkel ist dann gleich Null bzw. beseitigt, wenn diese Schnittgerade orthogonal auf der Mittenachse steht.

Der Nickwinkel ist der Winkel, den die Mittenachse mit der Fahrbahnoberfläche, ganz genau genommen der Längsrichtung der Fahrbahnoberfläche, einschließt. In der Regel wird ein Nickwinkel von Null eingestellt, wenn die Aufstellhöhe zwischen 45 und 65 cm liegt. Mit größerer Aufstellhöhe wird ein größerer Nickwinkel gewählt.

Der Seitenwinkel ist der Winkel, den die Mittenachse mit dem Fahrbahnrand einschließt. Ein günstiger Seitenwinkel beträgt z. B. 22°.

Der Aufstellabstand ist der senkrechte Abstand des Messgerätes zum Fahrbahnrand.

Die Aufstellhöhe ist der senkrechte Abstand des Schnittpunktes zwischen Scannerlängsachse und Mittenachse zur Fahrbahnoberfläche. Einfacher gesagt, es ist die Höhe, in der der Laserstrahl den Laserscanner gegenüber der Fahrbahnoberfläche verlässt.

Um ein erfindungsgemäßes Verfahren mit solchen gemäß dem Stand der Technik einfacher vergleichen zu können, werden hierzu die oben definierten Begriffe verwendet.

Aus der DE 199 02 287 A1 ist ein automatisches Verfahren zum Ausrichten einer Scanebene eines an einem Fahrzeug montierten Laserscanners zu einer Fahrbahnoberfläche beschrieben, bei dem ausgenutzt wird, dass sich eine Ebene durch nur drei Punkte definieren lässt. Es wird dabei vorausgesetzt, dass die Aufstellhöhe (dort Höhe des Senders des Laserscanners) gegenüber der Fahrbahn bekannt ist. Zur Ausrichtung der Scanebene zur Fahrbahnoberfläche werden zwei wohldefinierte Körper im Scanbereich angeordnet, die in einer vorbestimmten Höhe, abhängig vom gewünschten Nickwinkel (dort Neigungswinkel), zwischen der Scanebene und der Fahrbahn einen definierten Wert von Strahlung reflektieren. Im Falle, dass ein Neigungswinkel von 0° eingestellt werden soll, d. h. dass die Scanebene parallel zur Fahrbahnebene ausgerichtet werden soll, reflektiert der Körper in der bekannten Höhe des Senders des Laserscanners den definierten Wert. Der Sender wird solange in seiner Lage verstellt, bis die vom Körper reflektierte Strahlung den definierten Wert ausweist. Anschließend wird dieser Verfahrensschritt mit dem anderen Körper wiederholt, womit der Rollwinkel auf Null eingestellt und die Lage der Scanebene festgelegt wird.

Das Verfahren ist zur automatischen Justage eines Laserscanners an einem PKW vorgesehen. Für eine Verwendung zum Ausrichten eines Laserscanners, der neben einer Fahrbahn aufgestellt wird, ist an diesem Verfahren insbesondere nachteilig, dass zum Ausrichten der Scanebene zum einen die Höhe des Senders gegenüber der Fahrbahn bekannt sein muss und zum anderen mit den beiden wohldefinierten Körpern spezielle Hilfsmittel erforderlich sind, deren Anordnen und Anmessen bei laufenden Verkehr schwierig ist. Darüber hinaus lässt sich mit diesem Verfahren nicht die Lage des Scanwinkelbereiches einrichten.

Gemäß einem Verfahren der Patentschrift EP 2 105 761 B1 kann die Scanebene eines Laserscanners parallel zu einer Fahrbahnoberfläche ausgerichtet werden, ohne dass die Aufstellhöhe (dort Höhe des Senders des Laserscanners) bekannt ist. Die Ausrichtung erfolgt ausschließlich durch die Ermittlung von Entfernungswerten und setzt die Definition eines rechtwinkligen kartesischen Raumkoordinatensystems (dort Fahrbahnkoordinatensystem) und eines rechtwinkligen kartesischen Scannerkoordinatensystems voraus.

Das Raumkoordinatensystem wird gebildet durch eine Fahrbahnlängsachse, die in Fahrtrichtung parallel zum Verlauf eines Fahrbahnrandes verläuft, eine Fahrbahnquerachse, die mit der Fahrbahnlängsachse in der als eine Ebene angenommenen Fahrbahnoberfläche liegt, sowie eine auf der Fahrbahnoberfläche stehende Normalachse, die in Richtung einer Flächenormale verläuft.

Der aufgestellte Laserscanner und die damit vorgegebene Raumlage des Scannerspiegels sowie die Abstrahlebene des vom Scannerspiegel reflektierten Laserstrahls, welche die Scanebene darstellt, definieren das Scannerkoordinatensystem. Es ist durch eine Scanachse, um die der Scannerspiegel rotiert oder geschwenkt wird, eine Mittenachse, welche den Scanwinkelbereich des Laserscanners halbiert, und eine Scannerlängsachse, die gemeinsam mit der Mittenachse die Scanebene aufspannt, bestimmt.

Der Auftreffpunkt des Laserstrahls auf dem Scannerspiegel und damit auf der optischen Achse eines den Laserstrahl aussendenden Lasers bildet den Koordinatenursprung des Scannerkoordinatensystems.

Der Koordinatenursprung des Raumkoordinatensystems wird in einen Durchstoßpunkt einer durch den Koordinatenursprung des Scannerkoordinatensystems gedachten Flächennormale der Fahrbahnoberfläche durch die Fahrbahnoberfläche gelegt.

Der Abstand des Koordinatenursprungs des Scannerkoordinatensystems zum Koordinatenursprung des Raumkoordinatensystems definiert die Aufstellhöhe.

Nach dem empirischen Aufstellen des Laserscanners neben der Fahrbahn ist die Scanebene zur Fahrbahnebene um einen zufälligen Rollwinkel (dort Längsneigungswinkel) und einen zufälligen Nickwinkel (dort Querneigungswinkel) gegenüber der Fahrbahnebene geneigt. Die Mittenachse (dort Scannerquerachse) schließt mit dem Fahrbahnrand einen zufälligen Seitenwinkel ein. Der zufällige Rollwinkel und der zufällige Nickwinkel sind klein und der zufällige Seitenwinkel weicht nur wenig von 90° ab.

Zum Ausrichten des Laserscanners werden anschließend in drei Verfahrensschritten jeweils mit Hilfe von gemessenen Entfernungswerten erst der zufällige Rollwinkel durch paralleles Ausrichten der Scannerlängsachse zur Fahrbahnlängsachse beseitigt, dann der zufällige Nickwinkel durch paralleles Ausrichten der Scanachse zur Flächennormalen der Fahrbahnoberfläche beseitigt und abschließend bei Bedarf die Aufstellhöhe ermittelt.

Das Verfahren zum Ausrichten eines Laserscanners zu einer Fahrbahn ist gemäß der vorbenannten EP 2 105 761 B1 abgeschlossen, nachdem die Scanebene parallel zur Fahrbahnoberfläche ausgerichtet ist.

Bei diesem Verfahren wird vorausgesetzt, dass eine horizontale Ausrichtung der Scanebene zur Fahrbahn die richtige Ausrichtung ist, um einen optimalen Messbereich zu erreichen.

In der Praxis sind jedoch die Aufstellbedingungen insbesondere für mobile Messgeräte mit Laserscanner, die nur temporär aufgestellt werden sollen, sehr differenziert, sodass eine horizontale Ausrichtung nicht immer optimal ist.

Insbesondere mobile Laserscanner sollen unauffällig und möglichst integriert in ihrer Umgebung, häufig von der Fahrbahn aus betrachtet hinter einem natürlichen Sichtschutz oder einer Leitplanke, schnell aufgestellt und ausgerichtet werden können. Um trotz Sichthindernissen einen freien Blick des Laserscanners auf die Fahrbahn abzusichern, kann es von Interesse sein, den Laserscanner in seiner Aufstellhöhe variierbar und damit an die Umgebungssituation anpassbar aufzustellen zu können. Eine unterschiedliche Aufstellhöhe kann sich auch ungewollt aus einem Höhenunterschied zwischen der Bodenfläche und der Fahrbahnoberfläche ergeben.

Mit zunehmender Aufstellhöhe kann sich dann ergeben, dass bei einer horizontalen Ausrichtung der Scanebene kein zuverlässiges Anmessen mehr gewährleistet ist, sodass, um zu einem optimalen Messbereich zu kommen, ein von der Aufstellhöhe abhängiger Nickwinkel eingestellt werden muss, womit die Scanebene mit der Fahrbahnoberfläche einen entsprechenden Winkel kleiner 90° einschließt. Für die Einstellung eines Nickwinkels von größer 0° sollte auch der Aufstellabstand berücksichtigt werden. Wenn dieser innerhalb bestimmter Toleranzen immer gleich ist, kann dieser Aufstellabstand bereits bei der Generierung des abhängigen Nickwinkels beachtet werden. Ansonsten werden vorgegebene Nickwinkel abgelegt, die jeweils einer Aufstellhöhe bzw. einem Toleranzbereich um diese und einem Aufstellabstand bzw. einem Toleranzbereich um diesen zugeordnet werden.

Zwar sollte es für den Fachmann kein Problem darstellen, einen gemäß der vorbenannten EP 2 105 761 B1 ausgerichteten Laserscanner um einen von der Aufstellhöhe abhängigen, vorgegebenen Nickwinkel zu verkippen, jedoch gibt die vorbenannte EP 2 105 761 B1 hierzu keine Anregung. Die Aufstellhöhe wird hier gegebenenfalls nur ermittelt, um zu wissen, in welcher Höhe passierende Fahrzeuge angemessen werden.

Darüber hinaus wird mit diesem Verfahren nicht offenbart oder angeregt, den Laserscanner mit einem spitzen Seitenwinkel, den die Mittenachse mit dem Fahrbahnrand einschließt, auszurichten.

In jedem Fall würde die Einstellung eines Nickwinkels von ungleich 0° und eines spitzen Seitenwinkels zusätzliche Verfahrensschritte erfordern, deren Abläufe aus der vorbenannten EP 2 105 761 B1 weder entnommen noch abgeleitet werden können.

Aus der vorbenannten DE 10 2011 050 659 B4 ist ein Verfahren zur Ausrichtung eines Verkehrsüberwachungsgerätes bekannt, bei dem mit einer Kamera, die fest mit einem Messsensor des Verkehrsüberwachungsgerätes verbunden ist, mehrere aufeinanderfolgende Abbildungen von den Objektbereich der Kamera durchfahrenden Fahrzeugen erstellt werden. Es wird in den Abbildungen anhand errechneter Fluchtpunkte von abgebildeten parallelen Körperkanten eine Ist-Horizontlinie ermittelt. Anschließend wird die Kamera solange verdreht, bis diese Ist-Horizontlinie mit einer Soll-Horizontlinie, welche die Abbildung quer in zwei gleichhohe Abbildungsteile teilt, zusammenfällt. Die Empfängermatrix der Kamera ist dann zur Soll-Horizontlinie ausgerichtet, das heißt, die Zeilen der Empfängermatrix verlaufen parallel zum Horizont und damit parallel zur Fahrbahnoberfläche. Indem die Kamera fest mit einem Messgerät verbunden ist, kann mit diesem Verfahren auch ein Messgerät horizontal ausgerichtet werden.

Ist das Messgerät ein Laserscanner, kann mit diesem Verfahren der Rollwinkel Null eingestellt bzw. beseitigt werden und ein vorgegebener Nickwinkel eingestellt werden. Es kann kein von einer Aufstellhöhe des Laserscanners abhängiger Nickwinkel eingestellt werden, wenn diese nicht bekannt ist. Es kann mit diesem Verfahren auch kein Seitenwinkel eingestellt werden.

Es ist die Aufgabe der Erfindung ein neues Verfahren zu schaffen, mit dem ein Laserscanner mit einem von seiner unbekannten Aufstellhöhe abhängigen Nickwinkel gegenüber der Fahrbahnoberfläche und einem vorgegebenen spitzen Seitenwinkel zum Fahrbahnrand mit wenig Aufwand ausgerichtet werden kann.

Diese Aufgabe wird mit einem Verfahren zum Ausrichten eines neben einer Fahrbahn mit einer unbekannten Aufstellhöhe aufgestellten Messgerätes, welches einen Laserscanner, eine diesem definiert fest zugeordnete Kamera und ein Display aufweist, zu der Fahrbahn gelöst.

Der Laserscanner definiert ein kartesisches rechtwinkliges Scannerkoordinatensystem mit einer Scanachse, einer Scannerlängsachse und einer Mittenachse.

Die Kamera definiert ein kartesisches rechtwinkliges Kamerakoordinatensystem mit einer Zeilenachse, einer optischen Achse und einer Spaltenachse.

Die Zeilenachse ist parallel zur Scannerlängsachse, die optische Achse ist parallel zur Mittenachse und die Spaltenachse ist fluchtend zur Scanachse ausgerichtet.

Der Abstand zwischen dem Koordinatenursprung des Kamerakoordinatensystems und dem Koordinatenursprung des Scannerkoordinatensystems ist sehr klein im Verhältnis zur Entfernung der in der Kameraabbildung abgebildeten Kanten vom Messgerät, weshalb rechentechnisch beide Koordinatensysteme als eins verstanden werden können.

Das Messgerät ist zur Fahrbahn so aufgestellt, dass die Scannerlängsachse in einer zu einer Fahrbahnoberfläche der Fahrbahn parallelen Ebene liegt, womit ein Nickwinkel, den das Messgerät mit der Fahrbahnoberfläche einschließt, gleich Null ist.

Das Verfahren zum Ausrichten des Messgerätes läuft nun wie folgt ab.

Eine Kameraabbildung der Kamera wird auf dem Display visualisiert und ein Straßenmodell wird auf das Display projiziert. Das Straßenmodell wird durch eine Vielzahl von auf einen Schnittpunkt zulaufenden Geraden gebildet, wobei der Schnittpunkt mit dem natürlichen Fluchtpunkt von Abbildungen eines Fahrbahnrandes der Fahrbahn und hierzu parallelen Kanten zusammenfällt, wenn das Messgerät so zur Fahrbahn ausgerichtet ist, dass die Mittenachse mit dem Fahrbahnrand einen vorgegebenen Seitenwinkel und mit der Fahrbahnoberfläche einen vorgegebenen Nickwinkel einschließt, wobei der vorgegebene Nickwinkel so groß ist, dass die Mittenachse auf der Fahrbahnoberfläche auftrifft. Das Straßenmodell muss den Schnittpunkt selbst nicht umfassen. Anschließend wird das Messgerät um die Scanachse und die Scannerlängsachse geneigt, wodurch sich die Kameraabbildung auf dem Display verdreht und verschiebt, bis die Abbildungen des Fahrbahnrandes und hierzu paralleler Kanten im Schnittpunkt fluchten. Damit schließt die Mittenachse mit dem Fahrbahnrand den vorgegebenen Seitenwinkel und mit der Fahrbahnoberfläche den vorgegebenen Nickwinkel ein.

Es wird vom Laserscanner ein Laserstrahl ausgesendet und die Entfernung eines Auftreffpunktes des Laserstrahls auf der Fahrbahnoberfläche zum Messgerät über eine Impulslaufzeitmessung berechnet.

Aus der berechneten Entfernung und dem vorgegebenen Nickwinkel wird die Aufstellhöhe berechnet und es wird zu der berechneten Aufstellhöhe ein zuvor ermittelter optimaler, von der Aufstellhöhe abhängiger Nickwinkel ausgewählt.

Das Straßenmodell wird anschließend auf das Display verschoben, wobei der Schnittpunkt mit dem natürlichen Fluchtpunkt der Abbildungen des Fahrbahnrandes und der hierzu parallelen Kanten zusammenfällt, wenn das Messgerät so zur Fahrbahn ausgerichtet ist, dass die Mittenachse mit dem Fahrbahnrand den vorgegebenen Seitenwinkel und mit der Fahrbahnoberfläche den ausgewählten abhängigen Nickwinkel einschließt.

Abschließend wird das Messgerät um die Scannerlängsachse geneigt, wodurch sich die Kameraabbildung auf dem Display verschiebt, bis die Abbildungen des Fahrbahnrandes und der hierzu parallelen Kanten im Schnittpunkt fluchten. Damit schließt die Mittenachse mit dem Fahrbahnrand weiterhin den vorgegebenen Seitenwinkel und mit der Fahrbahnoberfläche den ausgewählten abhängigen Nickwinkel ein, womit das Messgerät fertig eingerichtet ist.

Die Erfindung soll nachfolgend anhand eines Ausführungsbeispiels unter Zuhilfenahme von Zeichnungen näher erläutert werden. Hierzu zeigen:

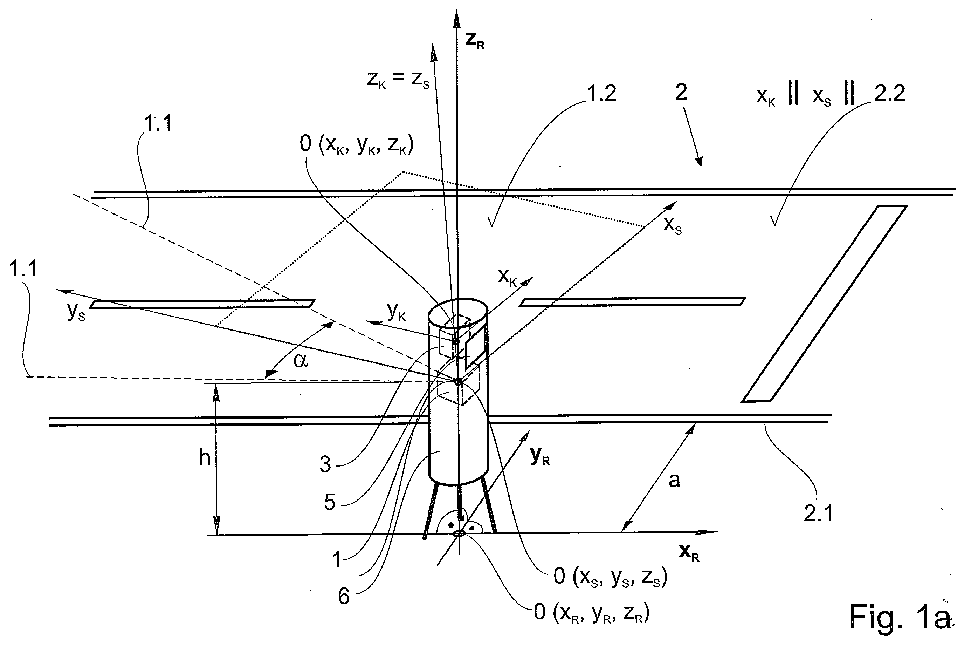

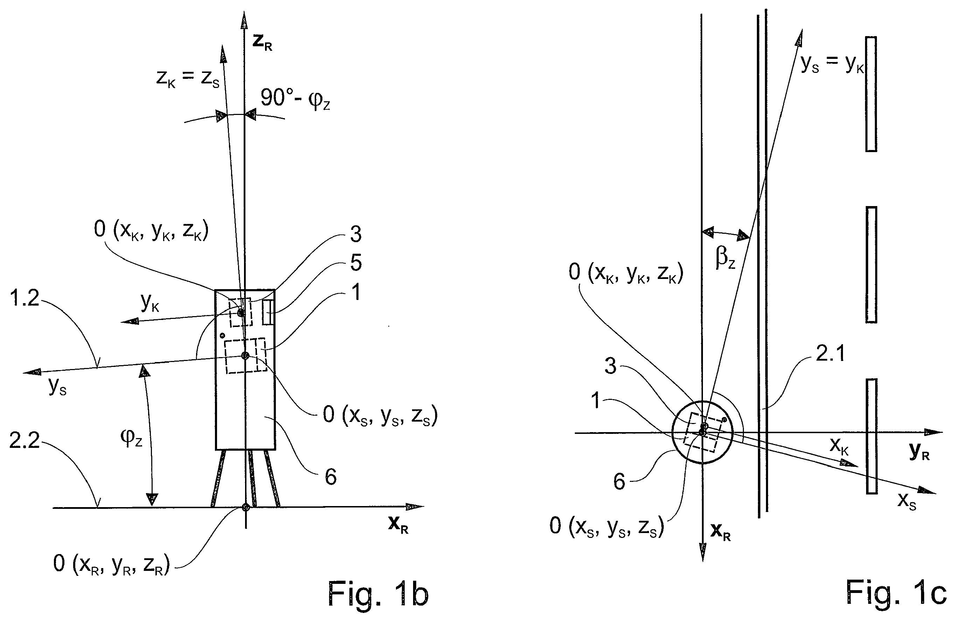

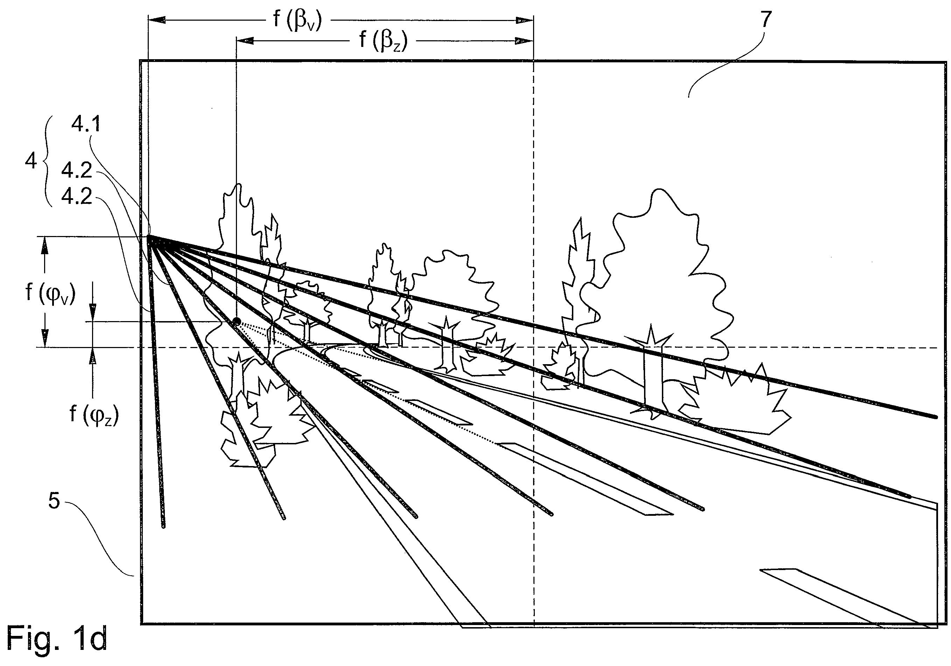

- Fig. 1 a: ein zur Fahrbahn angeordnetes und vorjustiertes Messgerät in perspektivischer Ansicht,
- Fig. 1 b: ein gemäß Fig. 1 a angeordnetes Messgerät in Seitenansicht,
- Fig. 1 c: ein gemäß Fig. 1 a angeordnetes Messgerät in Draufsicht,
- Fig. 1d: ein Display mit einer Darstellung einer Kameraaufnahme mit einem gemäß Fig. 1a angeordneten Messgerät, überlagert von einem Straßenmodell in einer ersten Relativlage,
- Fig. 2a: ein zur Fahrbahn mit einem vorgegebenen Seitenwinkel und einem vorgegebenen Nickwinkel ausgerichtetes Messgerät in perspektivischer Ansicht,
- Fig. 2b: ein zur Fahrbahn gemäß Fig. 2a ausgerichtetes Messgerät in Seitenansicht,
- Fig. 2c: ein zur Fahrbahn gemäß Fig. 2a ausgerichtetes Messgerät in Draufsicht,
- Fig. 2d: ein Display mit einer Darstellung einer Kameraaufnahme mit einem gemäß Fig. 2a ausgerichteten Messgerät, überlagert von dem Straßenmodell in erster Relativlage und
- Fig. 3: ein Display mit einer Darstellung einer Kameraaufnahme mit einem final ausgerichteten Messgerät, hier beispielhaft mit einem abhängigen Nickwinkel von 0°, überlagert von dem Straßenmodell in einer zweiten Relativlage.

Zur Beschreibung der Erfindung werden die Definitionen eines rechtwinkligen kartesischen Raumkoordinatensystems und eines rechtwinkligen kartesischen Scannerkoordinatensystems, wie sie aus der vorbenannten EP 2 105 761 B1 bekannt sind, aufgegriffen. Ebenfalls gelten die einleitend angegebenen Definitionen.

In Fig. 1a, 1b und 1c sind eine Fahrbahn 2 mit einem Fahrbahnrand 2.1 und einer Fahrbahnoberfläche 2.2 sowie ein neben dem Fahrbahnrand 2.1 aufgestelltes Messgerät 6 mit einem Laserscanner 1 und einer Kamera 3 gezeigt.

Wie an späterer Stelle genauer erläutert wird, ist das Messgerät 6 in dieser Darstellung bereits gegenüber der Fahrbahn 2 vorjustiert angeordnet. Die Vorjustierung selbst gehört nicht zum erfindungsgemäßen Verfahren.

Wie bereits erläutert, weist der Laserscanner 1 einen Scannerspiegel (nicht dargestellt) auf, der um eine Scanachse z_{S} drehbar ist, sodass ein von einem Laser (nicht dargestellt) kommender und auf den Scannerspiegel auftreffender gepulster Laserstrahl innerhalb eines vorgegebenen Scanwinkelbereiches α ausgelenkt werden kann. Die Lage des Scanwinkelbereiches α kann durch die Lage einer diesen halbierenden Mittenachse y_{S} definiert werden. Die Positionen des Laserstrahls in den Endlagen innerhalb des Scanwinkelbereiches α sind als Randstrahlen 1.1 dargestellt.

Das Scannerkoordinatensystem wird durch die Aufstellung des Laserscanners 1 und der damit vorgegebenen Raumlage des Scanwinkelbereiches α und der Scanachse z_{S} definiert. Die Koordinatenachsen sind gegeben durch die Scanachse z_{S}, die Mittenachse y_{S} und eine rechtwinklig zur Mittenachse y_{S} und Scanachse z_{S} verlaufende Scannerlängsachse x_{S}, die gemeinsam mit der Mittenachse y_{S} die Scanebene 1.2 aufspannt. Anstelle der Mittenachse y_{S} könnte auch einer der Randstrahlen 1.1 als eine Koordinatenachse definiert werden.

Zur Durchführung des Verfahrens ist es wesentlich, dass das Messgerät 6 neben dem Laserscanner 1 die Kamera 3 und ein Display 5 umfasst. Die Kamera 3 weist typischerweise eine Empfängermatrix und ein Objektiv mit einer optischen Achse y_{K} auf, welche senkrecht auf der Empfängermatrix steht. Die optische Achse yK, die die optische Achse y_{K} schneidenden Zeilen (Zeilenachse x_{K}) und die die optische Achse y_{K} schneidenden Spalten (Spaltenachse z_{K}) der Empfängermatrix definieren ein rechtwinkliges kartesisches Kamerakoordinatensystem.

Der Laserscanner 1 und die Kamera 3 sind mit einer definierten Relativlage zueinander fest angeordnet, wobei die Zeilenachse x_{K} parallel zur Scannerlängsachse x_{S}, die optische Achse y_{K} parallel zur Mittenachse y_{S} und die Spaltenachse z_{K} fluchtend zur Scanachse z_{S} ausgerichtet sind. Die Kamera 3 blickt dann in die Richtung der Mittenachse y_{S} und erfasst einen Objektbereich, in dem wenigstens teilweise der Messbereich liegt.

Die Koordinatenursprünge des Kamerakoordinatensystems und des Scannerkoordinatensystems liegen so eng beieinander, dass deren Abstand im Verhältnis zu den Messentfernungen so gering ist, dass dieser vernachlässigbar ist und man rechnerisch davon ausgehen kann, dass das Kamerakoordinatensystem mit dem Scannerkoordinatensystem zusammenfällt.

Die Lage eines Objektpunktes bezogen auf das Scannerkoordinatensystem kann dann einfach über den Abbildungsmaßstab des Objektivs in dessen Abbildung als Bildpunkt innerhalb einer Aufnahme durch die Kamera (Kameraaufnahme) umgerechnet werden und umgekehrt.

Ist diese vorteilhafte Relativlage des Kamerakoordinatensystems zum Scannerkoordinatensystem nicht gegeben, weil z. B. die Kamera ein differenziertes Objektfeld erfassen soll, kann die Lage eines Objektpunktes bezogen auf das Scannerkoordinatensystem in die Lage seiner Abbildung in einer Kameraaufnahme durch Koordinatentransformation und unter Beachtung des Abbildungsmaßstabes des Objektivs umgerechnet werden.

Für ein einfaches Verständnis des erfindungsgemäßen Verfahrens, soll nachfolgend davon ausgegangen werden, dass das Kamerakoordinatensystem mit dem Scannerkoordinatensystem zusammenfällt. In der Beschreibung des Ausführungsbeispiels und den Darstellungen hierzu in den Zeichnungen soll entsprechend von dieser Vereinfachung ausgegangen werden. Dass heißt; die Scannerlängsachse x_{S} fällt mit der Zeilenachse x_{K} zusammen, die Mittenachse y_{S} fällt mit der optischen Achse y_{K} zusammen und die Scanachse z_{S} fällt mit der Spaltenachse z_{K} der Kamera 3 zusammen. Die Ausrichtung des Messgerätes 6 und damit des Laserscanners 1 wird entsprechend anhand des eingeführten Scannerkoordinatensystems erläutert.

Das Raumkoordinatensystem ist ein raumfestes, rechtwinkliges kartesisches Koordinatensystem mit einem Koordinatenursprung im Aufstellort des Laserscanners 1. Es weist eine Fahrbahnlängsachse x_{R} auf, die in Fahrtrichtung parallel zum Verlauf des Fahrbahnrandes 2.1 verläuft, sowie eine hierzu rechtwinklig angeordnete Fahrbahnquerachse y_{R}. Diese beiden Achsen liegen gemeinsam in der als eine Ebene angenommenen Fahrbahnoberfläche 2.2. Die dritte Achse des Raumkoordinatensystems wird durch eine auf der Fahrbahnoberfläche 2.2 senkrecht stehende Normalachse z_{R} gebildet.

Bei einer empirischen Aufstellung des Messgerätes 6 und damit des Laserscanners 1 mit einer unbekannten Aufstellhöhe h mit einem senkrechten Aufstellabstand a neben der Fahrbahn 2 liegt das Scannerkoordinatensystem gegenüber dem Raumkoordinatensystem zufällig geneigt und verdreht. Es soll nun in eine definierte Lage zum Raumkoordinatensystem gebracht werden.

Bevor das erfindungsgemäße Verfahren beginnt, wird das Messgerät 6 und damit der Laserscanner 1 vorjustiert, das heißt, es wird so ausgerichtet, dass der Rollwinkel gleich Null bzw. beseitigt ist. Dies kann, mit einem der bekannten Verfahren z. B. entsprechend der vorbenannten EP 2 105 761 B1, oder mittels der Kamera 3, z. B. entsprechend der vorbenannten DE 10 2011 050 659 B4, erfolgen.

Wie in Fig. 1 a, 1b und 1 c dargestellt, verläuft die Scannerlängsachse x_{S} nach dieser Vorjustierung parallel zur Fahrbahnoberfläche 2.2, womit ein zufälliger Rollwinkel beseitigt bzw. gleich Null ist. Die Mittenachse y_{S} schließt einen zufälligen Seitenwinkel β_{z} mit dem Fahrbahnrand 2.1 (siehe Fig. 1 c) und einen zufälligen Nickwinkel ϕ_{z} mit der Fahrbahnoberfläche 2.2 (siehe Fig. 1 b) ein. Das heißt, die Scanebene 1.2 ist gegenüber der Fahrbahnoberfläche 2.2 um einen zufälligen Nickwinkel ϕ_{z} geneigt, der auch Null sein kann.

Mit dem erfindungsgemäßen Verfahren soll nun die Mittenachse y_{S} zum einen unter einem horizontalen, vorgegebenen spitzen Seitenwinkel βᵥ zum Fahrbahnrand 2.1 und zum anderen unter einem vertikalen, von der unbekannten und zu bestimmenden Aufstellhöhe h abhängigen Nickwinkel ϕ_{A} größer/gleich 0° zur Fahrbahnoberfläche 2.2 ausgerichtet werden.

Das erfindungsgemäße Verfahren basiert auf dem Wissen, welches auch bei dem Verfahren gemäß der vorbenannten DE 10 2011 050 659 B4 genutzt wird, dass eine natürliche Horizontlinie in einer Abbildung eines Objektfeldes auf der Empfängermatrix, nachfolgend Kameraabbildung 7, diese quer teilend abgebildet wird, wenn die Zeilenachse der Empfängermatrix der Kamera 3 horizontal ausgerichtet ist. Sie wird die Kameraabbildung 7 exakt mittig quer teilend abgebildet, wenn auch die optische Achse y_{K} der Kamera 3 horizontal ausgerichtet ist. Dieser Effekt ist unabhängig davon, ob der Horizont überhaupt sichtbar ist oder nicht.

Wenn also im Objektfeld der Kamera 3 parallel verlaufende geradlinige Kanten, wie Fahrbahnränder, Markierungslinien zwischen den Fahrstreifen der Fahrbahn 2 oder Körperkanten von Leitplanken in einer Kameraabbildung 7 abgebildet werden, dann schneiden sich diese abgebildeten Kanten in einem Fluchtpunkt, der auf der abgebildeten Horizontlinie liegt, bzw. auf einer gedachten Verlängerung der abgebildeten Horizontlinie über die Kameraabbildung 7 seitlich hinaus.

Der Fluchtpunkt liegt genau dann im Mittelpunkt der Kameraabbildung 7, wenn die Kamera 3 horizontal und mit der optischen Achse y_{K} parallel zu diesen parallelen Geraden ausgerichtet ist, das heißt, die optische Achse y_{K} in gleicher Richtung verläuft wie die Fahrbahnlängsachse x x_{R}.

Dieses Wissen macht sich die Erfindung zunutze, indem ein Straßenmodell 4 aus einer Vielzahl von auf einen Schnittpunkt 4.1 zulaufenden Geraden 4.2 gebildet und auf ein Display 5 projiziert wird, auf dem die Kameraabbildung 7 eingeblendet ist.

Dabei muss das Straßenmodell 4 den Schnittpunkt 4.1 selbst nicht zwingend umfassen.

Üblicherweise wird die Kameraabbildung 7 so in das Display 5 transformiert, dass die Begrenzungen des Displays 5 parallel zu den Zeilen- und Spaltenachsen x_{K}, z_{K} der Empfängermatrix der Kamera 3 verlaufen. Der Mittelpunkt der Empfängermatrix ist dann gleich dem Mittelpunkt der Kameraabbildung 7, der in den Mittelpunkt des Displays 5 transformiert wird.

Das Straßenmodell 4 simuliert durch die Geraden 4.2 im Objektfeld sichtbare, zum Fahrbahnrand parallele Kanten und durch den Schnittpunkt 4.1 den Fluchtpunkt, in dem diese Kanten bzw. Verlängerungen dieser Kanten scheinbar im Horizont zusammenlaufen.

Indem das Straßenmodell 4 so in das Display 5 projiziert wird, dass der Schnittpunkt 4.1 in seiner Lage vom Mittelpunkt des Displays 5 in Richtung der Zeilenachse x_{K} und in Richtung der Spaltenachse z_{K} abweicht, simuliert er einen natürlichen Fluchtpunkt, wie er entsteht, wenn die optische Achse y_{K} mit der Fahrbahnoberfläche 2.2 einen Nickwinkel größer Null und mit dem Fahrbahnrand 2.1 einen Seitenwinkel größer Null einschließt. Das heißt, die Lageabweichungen vom Mittelpunkt sind eine bekannte Funktion vom Nickwinkel f(ϕ) und eine bekannte Funktion vom Seitenwinkel f(β) wie in Fig. 1d angedeutet.

Zur Ausrichtung der Kamera 3 und damit des Messgerätes 6 so zur Fahrbahn 2, dass es einen vorgegebenen Seitenwinkel βᵥ und einen von der Aufstellhöhe h abhängigen Nickwinkel ϕ_{A} einschließt, sind zwei Justierschritte erforderlich.

Im Ergebnis des ersten Justierschrittes ist ein vorgegebener Seitenwinkel βᵥ eingestellt und die Aufstellhöhe h ist bekannt. Letztere wird verwendet, um einen zu dieser Aufstellhöhe h zugeordneten und damit von der Aufstellhöhe h abhängigen Nickwinkel ϕ_{A} in einem zweiten Justierschritt einzustellen.

Im ersten Justierschritt wird mit der Kamera 3, die mit dem Messgerät 6, wie bereits erläutert, in einer vorjustierten Position ausgerichtet ist, eine Kameraabbildung 7 erzeugt und auf dem Display 5 dargestellt. Das Straßenmodell 4 wird, wie in Fig. 1 d gezeigt, in das Display 5 mit Schnittpunkt 4.1 in einer ersten vorgegebenen Relativlage zu dessen Mittelpunkt projiziert. Die Relativlage des Schnittpunktes 4.1 zum Mittelpunkt des Displays 5 wurde zuvor in Abhängigkeit eines vorgegebenen Seitenwinkels ϕᵥ, eines vorgegebenen Nickwinkels ϕᵥ und der intrinsischen Parameter der Kamera 3 berechnet.

Da der zufällig Nickwinkel ϕ_{z} ungleich dem vorgegebenen Nickwinkel ϕᵥ und der zufällige Seitenwinkel ϕ_{z} ungleich dem vorgegebenen Seitenwinkel ϕᵥ ist, überdecken sich die Abbildungen der betreffenden parallelen Kanten in der Kameraabbildung 7 und die Geraden 4.2 des Straßenmodells 4 nicht.

Das Messgerät 6 wird jetzt so um die Scanachse z_{S} und die Scannerlängsachse x_{S} geneigt, wodurch sich die Kameraabbildung 7, die weiter in das Display 5 eingeblendet wird, verdreht und verschiebt, bis die Abbildungen der im Objektfeld sichtbaren, zum Fahrbahnrand 2.1 parallel verlaufenden Kanten, wie sie an Fahrbahnmarkierungen, Bordsteinkanten oder Leitplanken zu sehen sind, in der Kameraabbildung 7 mit den Geraden 4.2 des Straßenmodells 4 so weit als möglich in Deckung gebracht sind, in dem Sinne, dass die Kanten auf den Fluchtpunkt des eingeblendeten Straßenmodells 4 zulaufen. Häufig sind die genannten Kanten nur abschnittsweise geradlinig, weshalb die Abbildungen dieser Abschnitte ausgewählt werden, um die Kameraabbildung 7 mit dem Straßenmodell 4 in Deckung zu bringen. Dabei kann vorteilhaft die Kameraabbildung 7 auf dem Display 5 digital gezoomt werden, um damit die Abbildungen geeigneter Abschnitte zu vergrößern und die Genauigkeit der Überdeckung zu verbessern.

Vorteilhaft werden abgebildete Kanten oder Kantensegmente automatisiert erkannt und mittels farbiger Überlagerung hervorgehoben.

Die Erkennung der Kanten kann, nach Anwendung eines Kantendetektionsfilter auf die Kameraabbildung, mit bekannten Verfahren zur Liniendetektion z. B. mittels Hough-Transformation, erfolgen. Dabei kann vorteilhaft in Abhängigkeit der bekannten Lage des Schnittpunktes 4.1 eine Filterung der erkannten Kanten (Linien) bzw. Kantensegmente erfolgen.

Die Mittenachse y_{S} und damit das Messgerät 6 ist anschließend bereits zum Fahrbahnrand 2.1 um den vorgegebenen horizontalen Seitenwinkel βᵥ geneigt angeordnet. Mit der Fahrbahnoberfläche 2.2 schließt die Mittenachse y_{S} den vorgegebenen Nickwinkel ϕᵥ ein. Dieser ist so groß gewählt, dass die Mittenachse y_{S} auf die Fahrbahnoberfläche 2.2 in einer Entfernung auftrifft, aus der ein reflektiertes Signal durch das Messgerät 6 noch sicher detektiert werden kann.

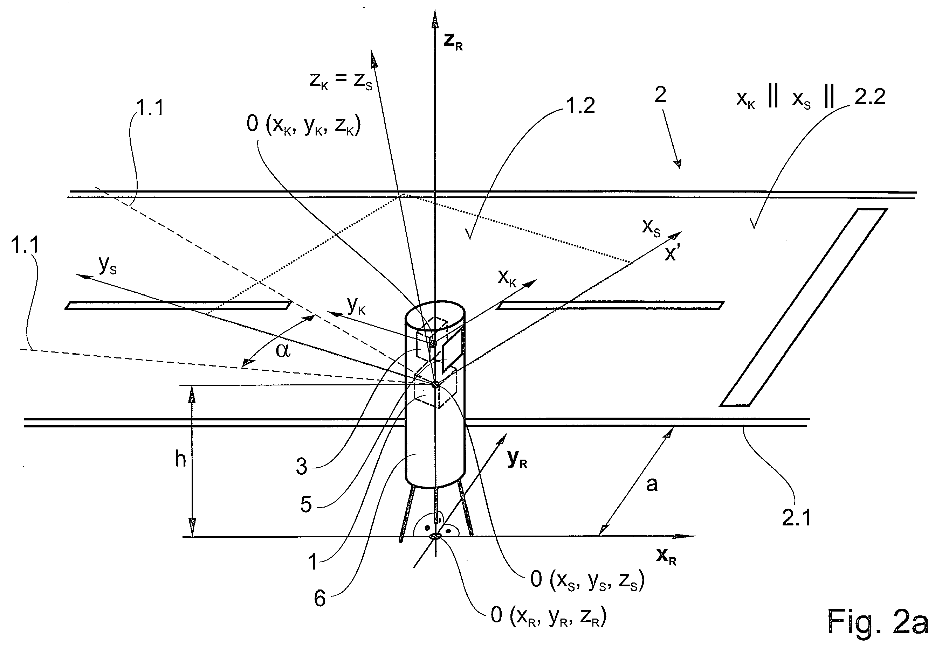

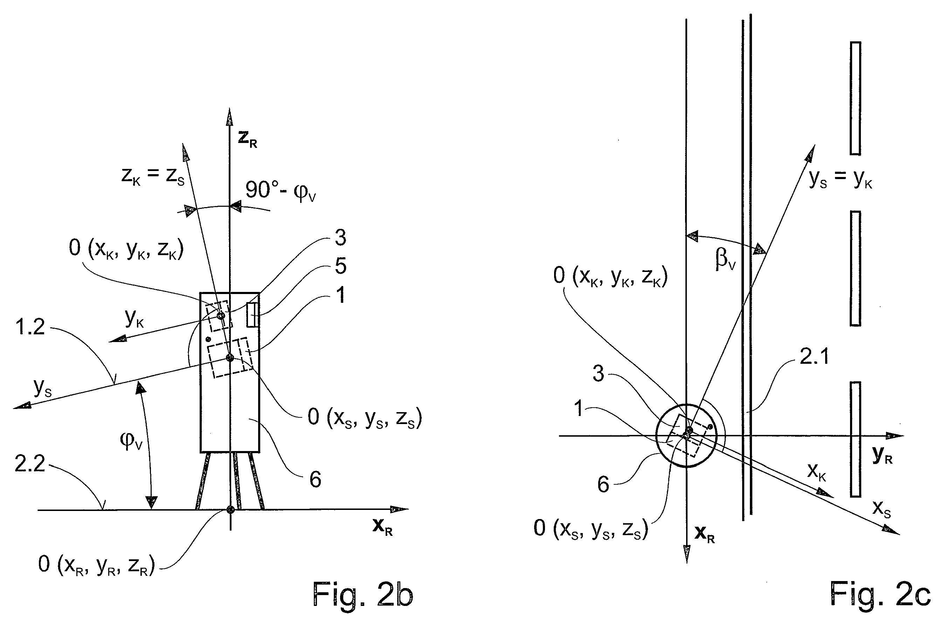

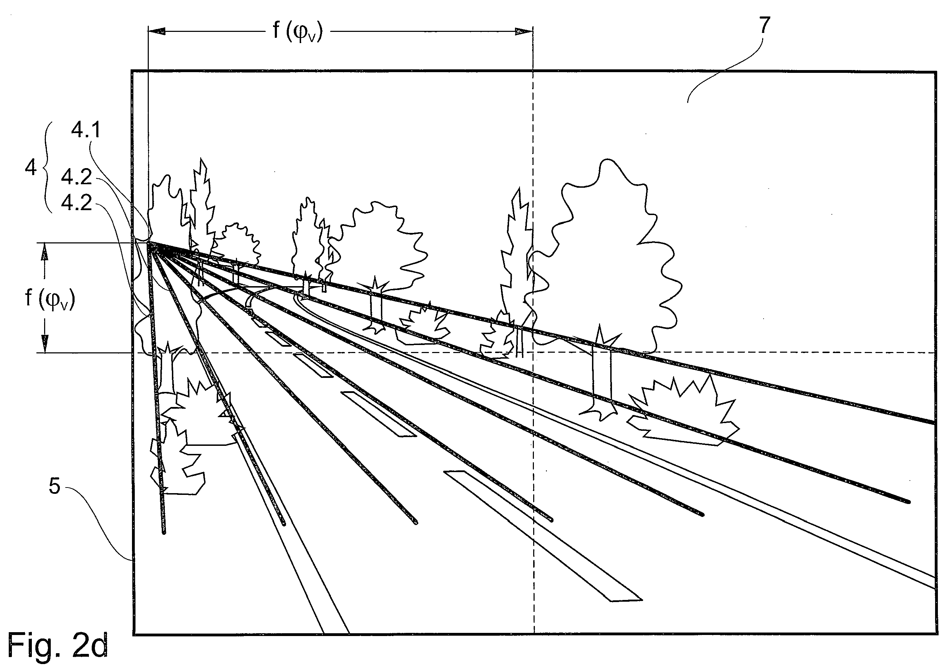

In den Fig. 2a, 2b und 2c ist die Ausrichtung des Messgerätes 6 zur Fahrbahn 2 nach dem ersten Justierschritt dargestellt. Fig. 2d zeigt das Display 5 mit der Kameraabbildung 7, erzeugt in dieser Ausrichtung des Messgerätes 6.

Das Messgerät 6 wird jetzt aktiviert und aus den Messwerten eines entlang der Mittenachse y_{S} ausgesendeten und an der Fahrbahnoberfläche 2.2 reflektierten Laserstrahls wird über eine Impulslaufzeitmessung die Entfernung des Auftreffpunktes des Laserstrahls zum Messgerät 6 berechnet. Aus der Entfernung und dem bekannten vorgegebenen Nickwinkel ϕᵥ wird anschließend über die trigonometrischen Funktionen in einem rechtwinkligen Dreieck die Aufstellhöhe h berechnet.

Um für den Messbereich den optimalen Nickwinkel einzurichten, ist zu jeder möglichen Aufstellhöhe h ist ein zuvor ermittelter und dieser zugeordneter, von der Aufstellhöhe h abhängiger Nickwinkel ϕ_{A} abgelegt, mit dem der Messbereich eine gegenüber der Fahrbahnoberfläche 2.2 optimierte Relativlage einnimmt.

Dabei wird davon ausgegangen, dass bei der Anordnung des Messgerätes 6 neben der Fahrbahn 2 ein innerhalb einer vernachlässigbaren Toleranz konstanter, bekannter Aufstellabstand a eingehalten wird. Dieser wurde bei der Bestimmung des von der Aufstellhöhe h abhängigen Nickwinkels ϕ_{A} ebenso wie der vorgegebene Seitenwinkel ϕᵥ beachtet. Soll auch für den Aufstellabstand a eine größere Variation zugelassen werden, so werden von der Aufstellhöhe h und vom Aufstellabstand a abhängige Nickwinkel ϕ_{A} abgelegt. Um dann den optimalen abhängigen Nickwinkel ϕ_{A} auszuwählen, muss dann auch der Aufstellabstand a bekannt sein. Im Vergleich zur Aufstellhöhe h kann dieser einfach z. B. mit einem Bandmass trivial und sicher ermittelt werden.

Nach Auswahl eines der errechneten Aufstellhöhe h zugeordneten, abhängigen Nickwinkels ϕ_{A} wird eine neue Relativlage des Schnittpunktes 4.1 des Straßenmodells 4 zum Mittelpunkt des Displays 5 bestimmt, die dann einen Fluchtpunkt simuliert, wenn das Messgerät 6 mit dem abhängigen Nickwinkel ϕ_{A} und dem vorgegebenen Seitenwinkel βᵥ eingerichtet ist.

Für den zweiten Justierschritt wird die Projektion des Straßenmodells 4 mit dieser Relativlage des Schnittpunktes 4.1 zum Mittelpunkt, die durch die Abbildung des realen Fluchtpunktes eingenommen wird, wenn auch der abhängige Nickwinkel ϕ_{A} für die Mittenachse y_{S} und damit für das Messgerät 6 eingestellt ist, verschoben. Abschließend wird das Messgerät 6 und damit die Mittenachse y_{S} erneut um die Scannerlängsachse x_{S} verkippt, bis die Abbildungen der betreffenden Kanten in der Kameraabbildung 7 wieder weitestmöglich mit dem Straßenmodell 4 in Deckung gebracht sind. Das Messgerät 6 ist jetzt so zur Fahrbahn 2 ausgerichtet, dass dessen Messbereich eine bekannte optimale Relativlage zur Fahrbahn 2 einnimmt.

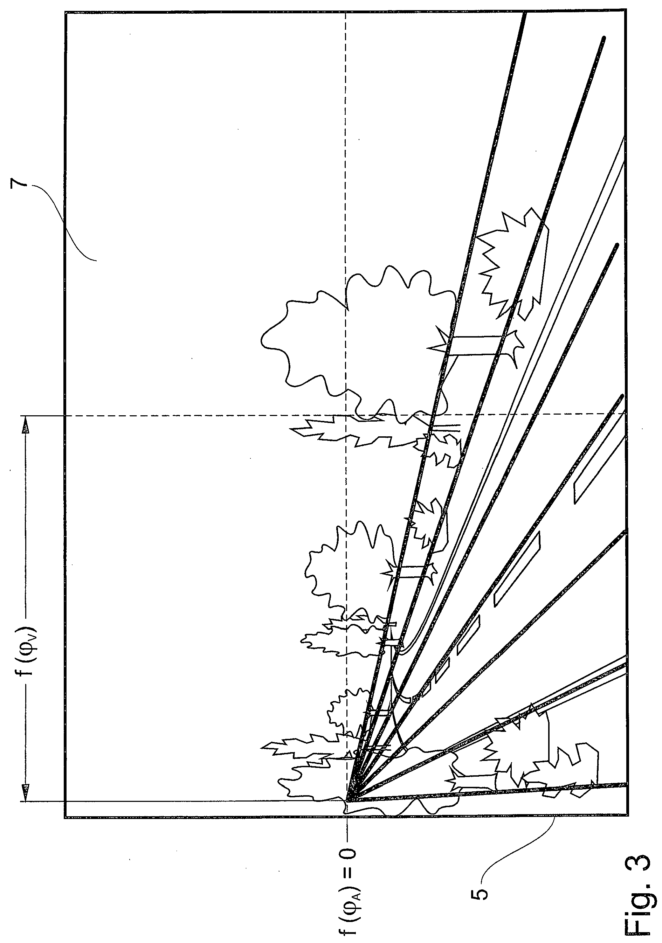

In Fig. 3 ist hierfür beispielhaft das Display 5 mit der Kameraabbildung 7 und dem Straßenmodell 4 dargestellt, bei einem eingestellten, abhängigen Nickwinkel ϕ_{A} von 0°.

Das Verfahren erlaubt eine unkomplizierte und sichere Ausrichtung eines Messgerätes 6 mit einem Laserscanner 1 und einer Kamera 3 zur Fahrbahn 2 und ist insbesondere für mobile Messgeräte 6 geeignet. Es ist für den Bediener fast selbsterklärend und es bedarf weder einer besonderen Qualifikation des Bedienpersonals noch eines hohen Zeitaufwandes.

### Bezugszeichenliste

- 1: Laserscanner
- 1.1: Randstrahl
- 1.2: Scanebene
- 2: Fahrbahn
- 2.1: Fahrbahnrand
- 2.2: Fahrbahnoberfläche
- 3: Kamera
- 4: Straßenmodell
- 4.1: Schnittpunkt
- 4.2: Gerade
- 5: Display
- 6: Messgerät
- 7: Kameraabbildung

Koordinaten des Raumkoordinatensystems
- x_{R}: Fahrbahnlängsachse
- y_{R}: Fahrbahnquerachse
- z_{R}: Normalachse
- 0 (x_{R}, y_{R}, z_{R}): Koordinatenursprung des Raumkoordinatensystems

Koordinaten des Kamerakoordinatensystems
- x_{K}: Zeilenachse
- y_{K}: optische Achse
- z_{K}: Spaltenachse
- 0 (x_{K}, y_{K}, z_{K}): Koordinatenursprung des Kamerakoordinatensystems

Koordinaten des Scannerkoordinatensystems
- x_{S}: Scannerlängsachse
- y_{S}: Mittenachse
- z_{S}: Scanachse
- 0 (x_{S}, y_{S}, z_{S}): Koordinatenursprung des Scannerkoordinatensystems
- α: Scanwinkelbereich
- β,: zufälliger Seitenwinkel
- βᵥ: vorgegebener Seitenwinkel
- ϕ_{z}: zufälliger Nickwinkel
- ϕᵥ: vorgegebener Nickwinkel
- ϕ_{A}: abhängiger Nickwinkel
- h: Aufstellhöhe
- a: Aufstellabstand

## Patentansprüche

1. Verfahren zum Ausrichten eines neben einer Fahrbahn (2) mit einer unbekannten Aufstellhöhe (h) aufgestellten Messgerätes (6), aufweisend einen Laserscanner (1), eine diesem definiert fest zugeordnete Kamera (3) und ein Display (5), zu der Fahrbahn (2), wobei der Laserscanner (1) ein kartesisches rechtwinkliges Scannerkoordinatensystem definiert, mit einer Scanachse (z_{S}), einer Scannerlängsachse (x_{S}) und einer Mittenachse (y_{S}), die Kamera (3) ein kartesisches rechtwinkliges Kamerakoordinatensystem definiert, mit einer Zeilenachse (x_{K}), einer optischen Achse (y_{K}) und einer Spaltenachse (z_{K}) und die Zeilenachse (x_{K}) parallel zur Scannerlängsachse (x_{S}), die optische Achse (y_{K}) parallel zur Mittenachse (y_{S}) und Spaltenachse (z_{K}) fluchtend zur Scanachse (z_{S}) ausgerichtet sind, und das Messgerät (6) zur Fahrbahn (2) so aufgestellt ist, dass die Scannerlängsachse (x_{S}) in einer zu einer Fahrbahnoberfläche (2.2) der Fahrbahn (2) parallelen Ebene liegt, mit folgendem Verfahrensablauf:
• Visualisieren einer Kameraabbildung (7) der Kamera (3) auf dem Display (5) und Projizieren eines Straßenmodells (4) mit einer Vielzahl von auf einen Schnittpunkt (4.1) zulaufenden Geraden (4.2) auf das Display (5), wobei der Schnittpunkt (4.1) mit dem natürlichen Fluchtpunkt von Abbildungen eines Fahrbahnrandes (2.1) der Fahrbahn (2) und hierzu parallelen Kanten zusammenfällt, wenn das Messgerät (6) so zur Fahrbahn (2) ausgerichtet ist, dass die Mittenachse (y_{S}) mit dem Fahrbahnrand (2.1) einen vorgegebenen Seitenwinkel (βᵥ) und mit der Fahrbahnoberfläche (2.2) einen vorgegebenen Nickwinkel (ϕᵥ) einschließt, wobei der vorgegebene Nickwinkel (ϕᵥ) so groß ist, dass die Mittenachse (y_{S}) auf der Fahrbahnoberfläche (2.2) auftrifft,
• Neigen des Messgerätes (6) um die Scanachse (z_{S}) und die Scannerlängsachse (x_{S}), wodurch sich die Kameraabbildung (7) auf dem Display (5) verdreht und verschiebt, bis die Abbildungen des Fahrbahnrandes (2.1) und hierzu parallelen Kanten im Schnittpunkt (4.1) fluchten, womit die Mittenachse (y_{S}) mit dem Fahrbahnrand (2.1) den vorgegebenen Seitenwinkel (βᵥ) und mit der Fahrbahnoberfläche (2.2) den vorgegebenen Nickwinkel (ϕᵥ) einschließt,
• Aussenden eines Laserstrahls durch den Laserscanner (1) und Berechnen der Entfernung eines Auftreffpunktes des Laserstrahls auf der Fahrbahnoberfläche (2.2) zum Messgerät (6) über eine Impulslaufzeitmessung,
• Berechnen der Aufstellhöhe (h) aus der berechneten Entfernung und dem vorgegebenen Nickwinkel (ϕᵥ),
• Auswählen eines zuvor ermittelten, der berechneten Aufstellhöhe (h) zugeordneten abhängigen Nickwinkels (ϕ_{A}),
• Verschieben des Straßenmodells (4) auf das Display (5), wobei der Schnittpunkt (4.1) mit dem natürlichen Fluchtpunkt von den Abbildungen des Fahrbahnrandes (2.1) und der hierzu parallelen Kanten zusammenfällt, wenn das Messgerät (6) so zur Fahrbahn (2) ausgerichtet ist, dass die Mittenachse (y_{S}) mit dem Fahrbahnrand (2.1) den vorgegebenen Seitenwinkel (βᵥ) und mit der Fahrbahnoberfläche (2.2) den abhängigen Nickwinkel (ϕ_{A}) einschließt und
• Neigen des Messgerätes (6) um die Scannerlängsachse (x_{S}), wodurch sich die Kameraabbildung (7) auf dem Display (5) verschiebt, bis die Abbildungen des Fahrbahnrandes (2.1) und der hierzu parallelen Kanten im Schnittpunkt (4.1) fluchten, womit die Mittenachse (y_{S}) mit dem Fahrbahnrand (2.1) den vorgegebenen Seitenwinkel (βᵥ) und mit der Fahrbahnoberfläche (2.2) den abhängigen Nickwinkel (ϕ_{A}) einschließt, womit das Messgerät (6) fertig eingerichtet ist.

## Claims

1. Method for aligning a measuring unit (6) to a path (2) with an unknown installation altitude (h) next to the path (2) and comprising a laser scanner (1), a camera (3) definitely and fixedly associated with the laser scanner and a display (5), wherein the laser scanner (1) defines a rectangular Cartesian scanner coordinate system with a scan axis (zₛ), a scanner longitudinal axis (xₛ) and a middle axis (yₛ), the camera (3) defines a Cartesian rectangular camera coordinate system with a line axis (x_{K}), an optical axis (y_{K}) and a column axis (z_{K}) and the line axis (x_{K}) is oriented parallel to the scanner longitudinal axis (xₛ), the optical axis (y_{K}) is oriented parallel to the middle axis (yₛ) and the column axis (z_{K}) is oriented coaxially with the scan axis (zₛ), and the measuring unit (6) is installed relative to the path (2) so that the scanner longitudinal axis (xₛ) lies in a plane parallel to a surface (2.2) of the path (2), with the following procedure:
• Visualizing a camera image (7) of the camera (3) on the display (5) and projecting a street model (4) with a plurality of straight lines (4.2) converging on an intersection point (4.1) on the display (5), wherein the intersection point (4.1) coincides with the natural vanishing point of images of an edge (2.1) of the path (2) and edges parallel thereto if the measuring unit (6) is aligned relative to the path (2) so that the middle axis (yₛ) encloses a predetermined lateral angle (βᵥ) with the edge (2.1) of the path and a predetermined pitch angle (ϕᵥ) with the surface (2.2) of the path, wherein the magnitude of predetermined pitch angle (ϕᵥ) is such that the middle axis (yₛ) is incident on the surface (2.2) of the path,
• Tilting the measuring unit (6) about the scan axis (zₛ) and the scanner longitudinal axis (xₛ), whereby the camera image (7) is rotated and shifted on the display (5) until the images of the edge (2.1) of the path and edges parallel thereto coincide at the intersection point (4.1), so that the middle axis (yₛ) encloses the predetermined lateral angle (βᵥ) with the edge (2.1) of the path and encloses the predetermined pitch angle (ϕᵥ) with the surface (2.2) of the path,
• Emitting a laser beam by the laser scanner (1) and calculating the distance of a point of incidence of the laser beam on the surface (2.2) of the path from the measuring unit (6) by means of a pulse transit time measurement,
• Calculating the installation altitude (h) from the calculated distance and the predetermined pitch angle (ϕᵥ),
• Selecting a previously determined dependent pitch angle (ϕ_{A}) associated with the calculated installation altitude (h),
• Shifting the street model (4) on the display (5), wherein the intersection point (4.1) coincides with the natural vanishing point of the images of the edge (2.1) of the path and the edges parallel thereto, if the measuring unit (6) is oriented relative to the path (2) such that the middle axis (yₛ) encloses the predetermined lateral angle (βᵥ) with the edge (2.1) of the path and encloses the dependent pitch angle (ϕ_{A}) with the surface (2.2) of the path,
• Tilting the measuring unit (6) about the scanner longitudinal axis (xₛ), whereby the camera image (7) is shifted on the display (5) until the images of the edge (2.1) of the path and the edges parallel thereto align at the intersection point (4.1), so that the middle axis (yₛ) encloses the predetermined lateral angle (βᵥ) with the edge (2.1) of the path and encloses the dependent pitch angle (ϕ_{A}) with the surface (2.2) of the path, whereby the measuring unit (6) is aligned ready.

## Revendications

1. Procédé destiné à orienter par rapport à la voie de circulation (2) un appareil de mesure (6) implanté à une hauteur d'implantation (h) inconnue à côté d'une voie de circulation (2), comportant un scanner à laser (1), une caméra (3) affectée de manière fixe définie à ce dernier et un écran (5), le scanner à laser (1) définissant un système de coordonnées de scanner orthogonal cartésien, avec un axe de balayage (z_{S}), un axe longitudinal de scanner (x_{S}) et un axe médian (y_{S}), la caméra (3) définissant un système de coordonnées de caméra orthogonal cartésien, avec un axe des lignes (x_{K}), un axe optique (y_{K}) et un axe des colonnes (z_{K}) et l'axe des lignes (x_{K}) étant orienté à la parallèle de l'axe longitudinal du scanner (x_{S}), l'axe optique (y_{K}) étant orienté à la parallèle de l'axe médian (y_{S}) et de l'axe des colonnes (z_{K}), en alignement avec l'axe de balayage (z_{S}) et l'appareil de mesure (6) étant implanté par rapport à la voie de circulation (2) de telle sorte que l'axe longitudinal du scanner (x_{S}) soit situé dans un plan parallèle à la surface (2.2) de la voie de circulation (2), avec le déroulement de procédé suivant :
- visualisation d'une reproduction (7) de la caméra (3) sur l'écran (5) et projection d'un modèle de la route (4) avec une pluralité de droites (4.2) convergeant vers un point d'intersection (4.1) sur l'écran (5), le point d'intersection (4.1) coïncidant avec le centre de projection naturel de reproductions d'un bord (2.1) de la voie de circulation (2) et avec des arêtes parallèles à ce dernier, lorsque l'appareil de mesure (6) est orienté par rapport à la voie de circulation (2) de telle sorte que l'axe médian (y_{S}) forme avec le bord (2.1) de la voie de circulation un angle latéral (βᵥ) prédéfini et avec la surface (2.2) de la voie de circulation un angle d'inclinaison longitudinale (ϕᵥ) prédéfini, l'angle d'inclinaison longitudinale (ϕᵥ) prédéfini étant si important que l'axe médian (y_{S}) soit incident sur la surface (2.2) de la voie de circulation,
- inclinaison de l'appareil de mesure (6) autour de l'axe de balayage (z_{S}) et de l'axe longitudinal du scanner (x_{S}), suite à quoi, la reproduction (7) de la caméra se tourne et se déplace sur l'écran (5), jusqu'à ce que les reproductions du bord (2.1) de la voie de circulation et des arêtes parallèles à ces derniers soient alignées au point d'intersection (4.1), suite à quoi l'axe médian (y_{S}) forme avec le bord (2.1) de la voie de circulation l'angle latéral (βᵥ) prédéfini et avec la surface (2.2) de la voie de circulation l'angle d'inclinaison longitudinale (ϕᵥ) prédéfini,
- émission d'un rayon laser par le scanner à laser (1) et calcul de l'éloignement d'un point d'incidence du rayon laser sur la surface (2.2) de la voie de circulation vers l'appareil de mesure (6), via une mesure du temps de propagation de l'impulsion,
- calcul de la hauteur d'implantation (h) à partir de l'éloignement calculé et de l'angle d'inclinaison longitudinale (ϕᵥ) prédéfini,
- sélection d'un angle d'inclinaison longitudinale (ϕ_{A}) dépendant, déterminé précédemment, affecté à la hauteur d'implantation (h) calculée,
- déplacement du modèle de la route (4) sur l'écran (5), le point d'intersection (4.1) coïncidant avec le point d'alignement naturel des reproductions du bord (2.1) de la voie de circulation et des arêtes parallèles à celui-ci, lorsque l'appareil de mesure (6) est orienté par rapport à la voie de circulation (2) de telle sorte que l'axe médian (y_{S}) forme avec le bord (2.1) de la voie de circulation l'angle latéral (ϕᵥ) prédéfini et avec la surface (2.2) de la voie de circulation l'angle d'inclinaison longitudinale (ϕ_{A}) dépendant et
- inclinaison de l'appareil de mesure (6) autour de l'axe longitudinal du scanner (x_{S}), suite à quoi, la reproduction (7) de la caméra se déplace sur l'écran (5), jusqu'à ce que les reproductions du bord (2.1) de la voie de circulation et des arêtes parallèles à ce dernier soient alignées au point d'intersection (4.1), suite à quoi, l'axe médian (y_{S}) forme avec le bord (2.1) de la voie de circulation l'angle latéral (βᵥ) prédéfini et avec la surface (2.2) de la voie de circulation l'angle d'inclinaison longitudinale (ϕ_{A}) dépendant, suite à quoi, l'installation de l'appareil de mesure (6) est achevée.
